# EUROPÄISCHE PATENTSCHRIFT

(11) **EP 3 350 906 B1**
(45) Veröffentlichungstag und Bekanntmachung des Hinweises auf die Patenterteilung: **31.08.2022**
(21) Anmeldenummer: 16760089.9
(22) Anmeldetag: 05.09.2016
(51) Int. Cl.: H02K 15/06

(54) **VERFAHREN UND ZWEITEILIGE WERKZEUGANORDNUNG ZUM HERSTELLEN EINES STATORS FÜR EINE ELEKTRISCHE MASCHINE**
METHOD AND TWO-PART TOOL ARRANGEMENT FOR PRODUCING A STATOR FOR AN ELECTRICAL MACHINE
PROCÉDÉ ET ENSEMBLE OUTIL EN DEUX PARTIES POUR FABRIQUER UN STATOR DE MACHINE ÉLECTRIQUE

(30) Priorität: 18.09.2015 DE 102015217922
(43) Veröffentlichungstag der Anmeldung: 25.07.2018
(73) Patentinhaber: Vitesco Technologies GmbH, 93055 Regensburg (DE)
(72) Erfinder: GOHS, Axel, 12459 Berlin (DE); RADTKE, Christoph, 12249 Berlin (DE)
(74) Vertreter: Vitesco Technologies
(86) Internationale Anmeldenummer: PCT/EP2016/070795
(87) Internationale Veröffentlichungsnummer: WO 2017/045940

(56) Entgegenhaltungen:
- EP-B1- 2 599 194
- EP-B1- 2 661 801
- DE-A1- 4 031 276
- JP-A- 2006 136 082
- JP-A- 2012 205 344

## Beschreibung

Die Erfindung betrifft ein Verfahren zum Herstellen eines Stators einer elektrischen Maschine sowie eine Werkzeuganordnung zum Durchführen des Verfahrens. Der Stator soll eine Zweischichtwicklung aufweisen, welche pro Nut eines Blechpakets jeweils ein elektrisches Leiterelement für eine radial au-βenliegende Schicht und ein elektrisches Leiterelement für eine radial innenliegende Schicht der Zweischichtwicklung aufweist. Bei jedem Leiterelement kann es sich beispielsweise jeweils um einen isolierten Draht handeln. Zu der Erfindung gehört schließlich auch der fertige Stator.

Ein Stator einer elektrischen Maschine weist zum Erzeugen eines magnetischen Drehfelds ein Blechpaket sowie elektrische Spulen auf. Das Blechpaket besteht aus elektrisch gegeneinander isolierten weichmagnetischen Blechschichten. In dem Blechpaket sind Nuten angeordnet, in denen wiederum jeweils elektrische Leiterelemente der Spulen angeordnet sind.

Die Gesamtheit der Spulen wird als Wicklung bezeichnet. Bei der genannten Zweischichtwicklung sind pro Nut jeweils zwei Leiterelemente angeordnet, beispielsweise zwei Drähte. Die in den Nuten radial außenliegenden Leiterelemente bilden einen äußeren Ring oder eine äußere Schicht der Zweischichtwicklung. Die radial innenliegenden Leiterelemente bilden die radial innenliegende Schicht. Die aus der Stirnseite eines Blechpakets herausragenden Leiterstücke der Leiterelemente einer Schicht werden mit den Leiterelementen der aus der Stirnseite herausragenden Leiterstücke der anderen Schicht in Umfangsrichtung gekreuzt oder verschränkt. Durch anschließendes elektrisches Verbinden von Leiterenden einer Schicht mit einem korrespondierenden Leiterende der anderen Schicht können gezielt die einzelnen Leiterelemente miteinander elektrisch verschaltet werden und so die elektrischen Spulen gebildet werden.

Um auch elektrische Anschlussenden für die elektrischen Spulen sowie mehrere Schleifen oder Windungen pro Spule zu erhalten, ist es nötig, für besondere, selektive Leiterenden die Verschränkung unregelmäßig zu wählen, damit sich hierdurch zum einen freistehende Spulenanschlüsse und zum anderen ein Windungsübergang von einer Windung der Spule zur nächsten Windung ergibt. Aufgrund solcher Verschaltungsbereiche weist das Muster der Verschränkung entlang des Umfangs eine Unregelmäßigkeit auf, die bei einer maschinellen automatisierten Herstellung eines Stators das Problem mit sich bringt, dass die Leiterenden aufwendig relativ zueinander positioniert werden müssen. Dies ist insbesondere deshalb aufwendig, da sämtliche aus der Stirnseite des Blechpakets herausragenden Leiterstücke für die Verschränkung noch einmal geknickt werden.

Bekannte Lösungen sehen vor, die Leiterelemente vorzubiegen, bevor sie in den Nuten angeordnet werden. Hierdurch sind aber Toleranzmaße nötig, durch welche sich eine ungünstige oder suboptimale axiale Wickelkopfhöhe des Wickelkopfes ergibt.

Die EP 2 661 801 B1 beschreibt ein Verfahren und eine Vorrichtung zur Biegung von Endabschnitten von Stableitern, insbesondere für Stabwicklungen von elektrischen Maschinen. Aus der EP 2 599 194 B1 ist eine Vorrichtung zum Verdrehen von elektrischen Leitersegmenten, insbesondere für Wicklungen von elektrischen Maschinen mit Leiterklemmsystem, bekannt. Weiterer Stand der Technik ist DE 40 31 276 A1.

Der Erfindung liegt die Aufgabe zugrunde, einen Stator mit Zweischichtwicklung und kompaktem Wickelkopf bereitzustellen. Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren zum Herstellen eines Stators bereitgestellt. In an sich bekannter Weise wird in Nuten eines Blechpakets für eine radial außenliegende Schicht und eine radial innenliegenden Schicht einer Zweischichtwicklung jeweils ein elektrisches Leiterelement pro Schicht angeordnet. Bei jedem Leiterelement kann es sich beispielsweise um einen isolierten Draht oder eine isolierte Kupferstange handeln. Es handelt sich also um eine Stabwicklung. Es können auch jeweils zwei Leiterelemente durch einen Draht in U-Form bereitgestellt sein, was auch als Haarnadeltechnik bezeichnet wird.

Jede der Schichten, das heißt jeder Ring aus Leiterelementen, kann dann getrennt prozessiert werden. Bei einer oder beiden der Schichten werden gemäß dem Verfahren an einer Stirnseite des Blechpakets jeweils in einem Positionierprozess in einem Normalbereich durch axiales Zusammenstecken eines Normalschrägungswerkzeugs mit axialen Leiterenden der Leiterelemente des Normalbereichs und anschließendes relatives Drehen des Normalschrägungswerkzeugs bezüglich des Blechpakets sowie des Weiteren in einem Verschaltungsbereich durch axiales Zusammenstecken eines Selektivschrägungswerkzeugs mit axialen Leiterenden der Leiterelemente des Verschaltungsbereichs insgesamt die Leiterenden aller Leiterelemente der Schicht relativ zueinander bewegt. Durch die relative Bewegung werden die Leiterenden derart zueinander angeordnet, dass sie bereits eine für eine Verschaltung eines Teils der Leiterenden mit korrespondierenden Leiterenden der anderen Schicht vorgesehene relative Endstellung zueinander aufweisen. Mit anderen Worten werden durch den Positionierprozess die Leiterenden bereits in ihre Endstellung gebracht, die sie für die Verschaltung mit Leiterenden der anderen Schicht aufweisen müssen. Hierzu sind das Normalschrägungswerkzeug und das Selektivschrägungswerkzeug vorgesehen. Mittels dieser beiden Schrägungswerkzeuge ist es möglich, diejenigen selektiven Leiterenden, die im Verschaltungsbereich für das Bilden der Spulenanschlüsse und das Verschalten mehrerer Windungen einer Spule nötig sind, unabhängig von den Leiterenden des Normalbereichs zu positionieren.

Durch die Erfindung ergibt sich der Vorteil, dass nach dem Positionierprozess die Leiterenden in den beiden Werkzeugen, das heißt dem Normalschrägungswerkzeug und dem Selektivschrägungswerkzeug, stecken und hierbei bereits ihre relative Endstellung zueinander aufweisen. Anschließend kann deshalb der Wickelkopf geformt werden, indem die aus dem Blechpaket herausstehenden Pins oder Leiterstücke der Leiterelemente verschränkt werden, ohne dass sich hierbei die relative Endstellung verändert. Die Leiterenden werden durch die beiden Werkzeuge in ihrer relativen Endstellung zueinander gehalten. Somit lässt sich ein kompakter Wickelkopf formen, ohne dass danach die Leiterenden neu positioniert werden müssten. Die genannten Werkzeuge können mehrteilige ausgestaltet sein.

Erfindungsgemäß wird im Positionierprozess mittels des Selektivschrägungswerkzeugs auch die relative Lage der Anschlussenden für die Spulen einerseits und der Leiterenden für die Windungsübergänge der Spulen andererseits eingestellt. Hierbei sieht die Weiterbildung vor, dass das Selektivschrägungswerkzeug mehrere Aufnahmebereiche oder Taschen zum jeweiligen Aufnehmen eines Leiterendes eines der Leiterelemente des Verschaltungsbereichs aufweist. Beim Zusammenstecken des Selektivschrägungswerkzeugs mit den Leiterenden der Leiterelemente des Verschaltungsbereichs bewegt eine bezüglich einer Steckrichtung schräg angeordnete Taschenwand einer oder einiger der Taschen (aber nicht aller Taschen) das hineinbewegte Leiterende in Umfangsrichtung, sodass die Leiterenden der Leiterelemente des Verschaltungsbereichs relativ zueinander bewegt werden. Die schräge Taschenwand bewegt also beim Aufstecken oder Zusammenstecken des Selektivschrägungswerkzeugs mit den Leiterenden eine zusätzliche Bewegung des Leiterendes entlang der Umfangsrichtung. Hierdurch werden diese Leiterenden (für den Spulenanschluss und die Windungsübergänge) aufeinander zu bewegt. Dies gibt in Umfangsrichtung einen räumlichen Versatz, durch welchen die Leiterenden für die Windungsübergänge dann jeweils mit einem Leiterende der anderen Schicht zusammengeführt wird, das nicht zur selben Windung, sondern zur nächsten Windung der Spule gehört.

Zu der Erfindung gehören auch Weiterbildungen, durch deren Merkmale sich zusätzliche Vorteile ergeben.

Um die Leiterenden günstig zu positionieren, ist gemäß einer Weiterbildung vorgesehen, dass in dem Positionierprozess die durch das Normalschrägungswerkzeug bewegten Leiterenden in Umfangsrichtung um einen vorbestimmten ersten Drehwinkel bewegt werden und die durch das Selektivschrägungswerkzeug bewegten Leiterenden in Umfangsrichtung um einen jeweiligen Drehwinkel versetzt werden, der kleiner als der erste Drehwinkel ist. Diese relative Anordnung der selektiven Leiterenden wird als negativer Twist bezeichnet, der bei der Verschaltung der Windungen vorteilhaft ist.

Gemäß einer Weiterbildung wird mittels der beiden Werkzeuge, das heißt des Normalschrägungswerkzeugs und des Selektivschrägungswerkzeugs, auch gleich der Wickelkopf geformt, das heißt die Schrägung der Leiterstücke vorgenommen. Bei dieser Weiterbildung ragt nach dem Anordnen der Leiterelemente in den Nuten, also zu Beginn des Positionierprozesses, ein Teil jedes Leiterelements der Schicht aus der Stirnseite als gerades Leiterstück axial heraus. Nach dem Positionierprozess, wenn also die Leiterenden ihre relative Endstellung zueinander aufweisen, werden dann in einem Twistprozess durch relatives Drehen und gleichzeitiges axiales Zusammenführen der beiden Werkzeuge einerseits und des Blechpakets andererseits insgesamt alle diese geraden Leiterstücke gemeinsam gebogen oder geknickt, sodass ein hierdurch gebildeter jeweiliger Schrägungsbereich aller Leiterstücke den gleichen Schrägungswinkel bezüglich der Stirnseite aufweist. Dies ergibt eine besonders kompakte Anordnung der Schrägungsbereiche im Wickelkopf.

Bevorzugt werden beide Schichten der Zweischichtenwicklung in der beschriebenen Weise prozessiert. Gemäß einer Weiterbildung ist hierbei vorgesehen, dass in dem Twistprozess die Leiterstücke der außenliegenden Schicht in eine Umfangsrichtung und die Leiterstücke der innenliegenden Schicht in eine entgegengesetzte Umfangsrichtung geknickt werden, sodass die Leiterstücke der beiden Schichten gekreuzt oder zueinander verschränkt angeordnet sind. Indem für jede Schicht der Positionierprozess und der Twistprozess durchgeführt werden, weisen die Leiterstücke an der Stirnseite des Blechpakets bereits ihre Endform auf und können beispielsweise durch Löten oder Schweißen elektrisch miteinander zu Spulen verbunden werden.

Damit auch jede einzelne Windung der Spulen in sich direkt nach dem Twistprozess durch elektrisches Verbinden von Leiterenden gebildet werden kann, sieht eine Weiterbildung vor, dass durch den Twistprozess die durch das Normalschrägungswerkzeug bewegten Leiterenden einer der Schichten jeweils radial fluchtend zu korrespondierenden Leiterenden der anderen Schicht angeordnet werden.

Dagegen ist gemäß einer Weiterbildung vorgesehen, dass nach dem Twistprozess nur ein Teil der durch das Selektivschrägungswerkzeug bewegten Leiterenden einer der Schichten zu korrespondierenden Leiterenden der anderen Schicht radial fluchtend angeordnet ist und zusätzlich pro vorgesehener elektrischer Spule jeweils ein Leiterende zwischen zwei benachbarten Leiterenden der anderen Schicht angeordnet ist. Hierdurch steht in jeder Schicht pro Spule ein Leiterende frei, das eben nicht radial fluchtend mit einem anderen Leiterende angeordnet ist. Dieses freie Leiterende bildet dann in vorteilhafter Weise einen Spulenanschluss, der insbesondere leicht zugänglich ist.

Gemäß einer Weiterbildung werden die frei aus dem Blechpaket herausstehenden Leiterstücke der Leiterenden nicht einfach geknickt oder geschrägt, sondern gekröpft. Hierzu sieht die Weiterbildung vor, dass im Positionierprozess alle Leiterenden jeweils in einem Aufnahmebereich oder einer Tasche des jeweiligen Werkzeugs angeordnet werden. Unter Aufnahmebereich oder Tasche ist insbesondere ein Loch, beispielsweise ein Sackloch, in einem Körper des jeweiligen Werkzeugs zu verstehen, also des Normalschrägungswerkzeugs beziehungsweise des Selektivschrägungswerkzeugs. Durch den Twistprozess wird jedes herausragende Leiterstück der Leiterelemente zwischen dem Schrägungsbereich und dem Leiterende gekröpft, sodass das Leiterende weiterhin axial ausgerichtet oder achsparallel zur Statorachse oder Rotationsachse ausgerichtet bleibt. Hierdurch ergibt sich der Vorteil, dass die Leiterenden der beiden Schichten einfach miteinander verschaltet werden können.

Um auch den ersten Verfahrensschritt, nämlich das Anordnen der Leiterelemente in den Nuten, zu vereinfachen, ist erfindungsgemäß vorgesehen, dass die Leiterelemente als gerade Stäbe oder als U-förmige Drähte bereitgestellt werden, beispielsweise als gerade Drähte. Die Leiterelemente werden zum jeweiligen Anordnen in einer der Nuten in ein axiales Ende der Nut gesteckt und in axialer Richtung in die Nut hineingeschoben. Hierdurch ergibt sich der Vorteil, dass zum Herstellen des Stators von gleichförmigen, geraden Stäben als Leiterelementen ausgegangen werden kann. Es ist also keine weitere Vorformung der Leiterelemente nötig, sondern alle Umformschritte werden durch den Positionierprozess und den Twistprozess durchgeführt. Weiterer Vorteil ist, dass eine Nutbreite der Nuten in Umfangsrichtung kleiner sein kann als eine Abmessung der Leiterelemente entlang der Umfangsrichtung. Mit anderen Worten lassen sich die Leiterelemente der Länge nach von einer Stirnseite aus in die Nut hineinstecken.

Zu der Erfindung gehört auch eine Werkzeuganordnung zum Herstellen des Stators. Die Werkzeuganordnung ist in vorteilhafter Weise dazu geeignet, eine Ausführungsform des erfindungsgemäßen Verfahrens durchzuführen. Die Werkzeuganordnung weist hierzu ein Normalschrägungswerkzeug mit jeweiligen Aufnahmebereichen oder Taschen zum Einstecken eines Leiterendes eines Leiterelements auf. Das Normalschrägungswerkzeug kann einteilig oder mehrteilig ausgestaltet sein. Des Weiteren ist ein Selektivschrägungswerkzeug mit jeweiligen Aufnahmebereichen oder Taschen zum Einstecken jeweils eines Leiterendes eines Leiterelements bereitgestellt. Auch das Selektivwerkzeug kann einteilig oder mehrteilig ausgestaltet sein. Das Normalschrägungswerkzeug und das Selektivschrägungswerkzeug sind zum Kaltumformen von Leiterelementen einer radial außenliegenden Schicht und/oder einer radial innenliegenden Schicht einer Zweischichtwicklung für einen Stator vorgesehen. Bei der Werkzeuganordnung ist auch eine Halteeinrichtung zum Halten eines Blechpakets des Stators bereitgestellt. Das Blechpaket ist durch die Halteeinrichtung dabei derart anordenbar, dass eine Stirnseite des Blechpakets dem Normalschrägungswerkzeug und dem Selektivschrägungswerkzeug zugewandt ist. Des Weiteren ist eine Bewegungsrichtung bereitgestellt, die dazu ausgelegt ist, bei in der Halteeinrichtung angeordnetem und mit Leiterelementen bestücktem Blechpaket in einem Positionierprozess jeweils ein Leiterende eines der Leiterelemente in jeweils einer der Taschen anzuordnen und hierzu zuerst das Normalschrägungswerkzeug entlang der axialen Richtung des Stators an die Stirnseite des Blechpakets heran zu bewegen und dann in Umfangsrichtung bezüglich der Stirnseite zu drehen und dann das Selektivschrägungswerkzeug entlang der axialen Richtung an die Stirnseite heran zu bewegen. Hierbei werden dann in der beschriebenen Weise die Leiterenden aller Leiterelemente in eine vorbestimmte relative Endstellung zueinander gebracht, die sie auch beim fertigen Stator aufweisen.

Erfindungsgemäß weist bei dem Selektivschrägungswerkzeug ein Teil der Taschen eine bezüglich der axialen Richtung schräg angeordnete Taschenwand auf, durch welche beim Zusammenstecken des Selektivschrägungswerkzeugs einerseits und der darin anzuordnenden Leiterenden andererseits jeweils eine Gleitfläche für das jeweilige in die Tasche hineinfahrende Leiterende gebildet ist, die das Leiterende in Umfangsrichtung abdrängt oder mit einer Biegekraft beaufschlagt. Hierdurch wird eine Relativposition der Leiterenden innerhalb des Selektivschrägungswerkzeugs im selben Arbeitsschritt vorgegeben.

Gemäß einer Weiterbildung ist die Bewegungseinrichtung dazu ausgelegt, nach dem Positionierprozess in einem Twistprozess das Normalschrägungswerkzeug und das Selektivschrägungswerkzeug einerseits und das Blechpaket andererseits zusammenzuführen und währenddessen das Normalschrägungswerkzeug und das Selektivschrägungswerkzeug gemeinsam (d.h. um denselben Drehwinkel) relativ zum Blechpaket zu drehen, sodass die Leiterelemente gleichmäßig bezüglich der Stirnseite um denselben Schrägungswinkel geknickt werden. Hierdurch lassen sich diejenigen Leiterstücke der Leiterelemente, die aus der Stirnseite herausstehen oder herausragen, besonders dicht anordnen.

Bei einem Stator, der mittels einer Ausführungsform des erfindungsgemäßen Verfahrens und/oder mittels einer Werkzeuganordnung gemäß der Erfindung hergestellt ist, ist gemäß einer Weiterbildung vorgesehen, dass radial innenliegende Nutöffnungen der Nuten in Umfangsrichtung eine Spaltbreite oder Nutbreite aufweisen, die kleiner ist als eine Abmessung der in den Nuten jeweils angeordneten Leiterelemente. Die Abmessung ist dabei in dieselbe Umfangsrichtung gemessen wie die Nutbreite. Mit anderen Worten lassen sich die Leiterelemente nicht entlang der radialen Richtung aus der Nut herausnehmen, sondern nur über eine der Stirnseiten hineinstecken. Eine solche geringe Nutbreite mit gleichzeitig verschränkten Leiterelementen im Wicklungskopf ist nur mittels des erfindungsgemäßen Verfahrens und/oder der erfindungsgemäßen Werkzeuganordnung möglich.

Im Folgenden ist ein Ausführungsbeispiel der Erfindung beschrieben. Hierzu zeigt:
- Fig. 1: eine schematische Darstellung einer perspektivischen Ansicht einer Ausführungsform des erfindungsgemäßen Stators,
- Fig. 2: eine schematische Darstellung einer einzelnen elektrischen Spule des Stators von Fig. 1,
- Fig. 3: eine schematische Darstellung einer perspektivischen Ansicht eines Verschaltungsbereichs von Windungen der Spule von Fig. 2 sowie elektrischen Anschlüssen der Spule,
- Fig. 4: eine schematische Darstellung des Verschaltungsbereichs von Fig. 3 in einer Draufsicht,
- Fig. 5: eine schematische Darstellung einer perspektivischen Ansicht des Stators von Fig. 1 zu Beginn seiner Herstellung, wobei ein Perspektive bezüglich Fig. 1 gedreht ist,
- Fig. 6: eine schematische Darstellung eines Normalschrägungswerkzeugs beim Zusammenführen mit Leiterenden von elektrischen Leiterelementen des Stators,
- Fig. 7: eine schematische Darstellung des Normalschrägungswerkzeugs von Fig. 6 während einer Bewegung in Umfangsrichtung,
- Fig. 8: eine schematische Darstellung eines Selektivschrägungswerkzeugs beim Zusammenführen mit den Leiterenden,
- Fig. 9: eine schematische Darstellung des Normalschrägungswerkzeugs und des Selektivschrägungswerkzeugs zu Beginn eines Twistprozesses,
- Fig. 10: eine schematische Darstellung des Normalschrägungswerkzeugs und des Selektivschrägungswerkzeugs während des Twistprozesses, und
- Fig. 11: eine schematische Darstellung einer Ausführungsform der erfindungsgemäßen Werkzeuganordnung mit dem Normalschrägungswerkzeug und dem Selektivschrägungswerkzeugs für zwei Schichten einer Zweischichtwicklung.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

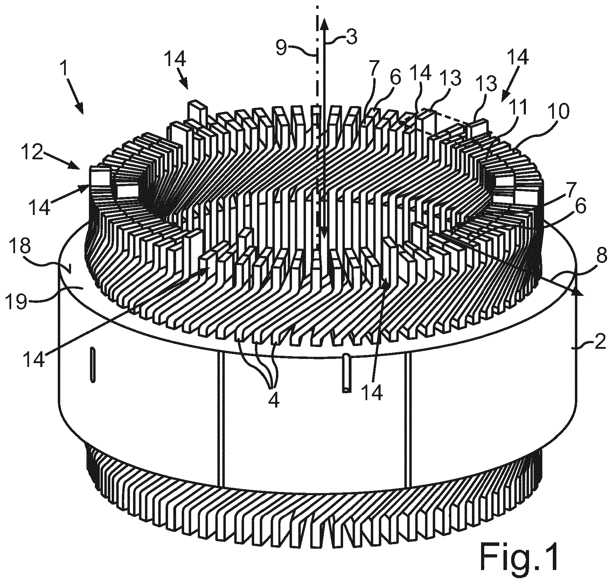

Fig. 1 zeigt einen Stator 1 für eine elektrische Maschine. Der Stator 1 kann beispielsweise für einen Starter-Generator eines Kraftfahrzeugs vorgesehen sein. Der Stator 1 weist ein Blechpaket 2 auf, das in an sich bekannter Weise aus weichmagnetischen Blechschichten (Koerzitivfeldstärke kleiner als 1000 A/m) gebildet sein kann, die elektrisch gegeneinander isoliert sind und entlang einer axialen Richtung 3 gestapelt oder geschichtet sind.

In Nuten 4 des Blechpakets 3 sind jeweils durch eine axiale Nutöffnung 5 zwei Leiterelemente 6, 7 eingesteckt worden. Der Übersichtlichkeit halber sind von den genannten Elementen jeweils nur einige mit einem Bezugszeichen versehen. Die Leiterelemente 6, 7 jeder Nut 4 sind in einer radialen Richtung 8 fluchtend hintereinander angeordnet. Die radiale Richtung 8 ist jeweils von einer Achse 9, durch welche die axiale Richtung 3 festgelegt ist, senkrecht nach außen gerichtet. Die Achse 9 entspricht der bestimmungsgemäßen Rotationsachse eines Rotors, der in dem Stator angeordnet werden kann.

Durch die unterschiedlichen radialen Abstände der Leiterelemente 6, 7 entstehen zwei Ringe oder Schichten 10, 11, wobei die radial außenliegenden Leiterelemente 6 die Schicht 10 und die radial innenliegenden Leiterelemente 7 die Schicht 11 darstellen. Die Schichten 10, 11 sind Bestandteil einer Zweischichtwicklung 12 des Stators 1. Die Zweischichtwicklung 12 umfasst in dem gezeigten Beispiel sechs elektrische Spulen, von denen sich jede durch Verschalten einer jeweiligen Teilmenge der Leiterelemente 6, 7 ergibt. Jeweils ein Leiterelement der äußeren Schicht 10 und ein Leiterelement der inneren Schicht 11 bildet einen Phasenanschluss oder Spulenanschluss 13 einer der Spulen. Die Spulenanschlüsse 13 einer Spule sind jeweils in einem Verschaltungsbereich 14 angeordnet.

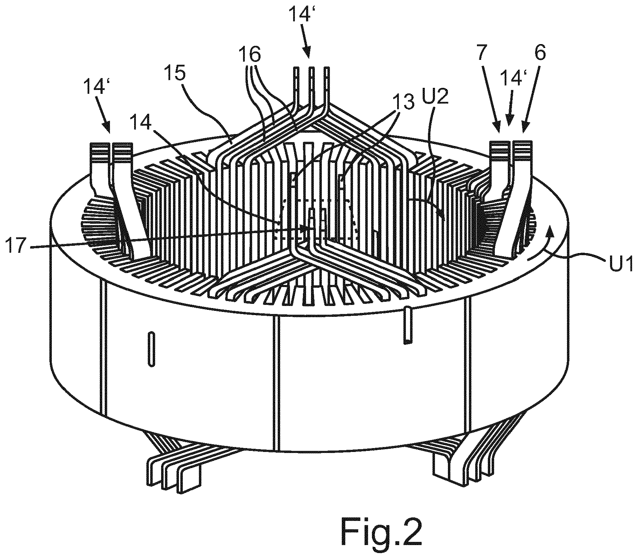

Fig. 2 zeigt zur Veranschaulichung eine einzelne elektrische Spule 15. Die Darstellung in Fig. 2 entspricht der Darstellung in Fig. 1, wobei all diejenigen Leiterelemente 6, 7 ausgeblendet sind, die zu den übrigen elektrischen Spulen gehören. Die in Fig. 2 dargestellte Spule 15 weist insgesamt drei Schleifen oder Windungen 16 auf, die innerhalb des Verschaltungsbereichs 14 durch eine Windungsverschaltung 17 elektrisch miteinander verschaltet sind.

Zum Bilden der Windungen 16 der Spule 15 sind die Leiterelemente 6 der äußeren Schicht 11 entlang einer Umfangsrichtung U1 geschrägt oder geknickt worden, während die Leiterelemente 7 der inneren Schicht 11 in eine entgegengesetzte Umfangsrichtung U2 geknickt worden sind. Hierdurch sind die Leiterelemente 6, 7 der beiden Schichten 10, 11 miteinander verschränkt.

Für das Gestalten der Spulenanschlüsse 13 und der Windungsverschaltung 17 müssen die Leiterelemente 6, 7 im Verschaltungsbereich 14 in spezieller Weise selektiv geformt sein. Die Verschaltungen der Leiterelemente 6, 7, außerhalb des Verschaltungsbereichs 14 stellen zusammen einen Normalbereich 14' dar, in welchem keine selektive Formung nötig ist.

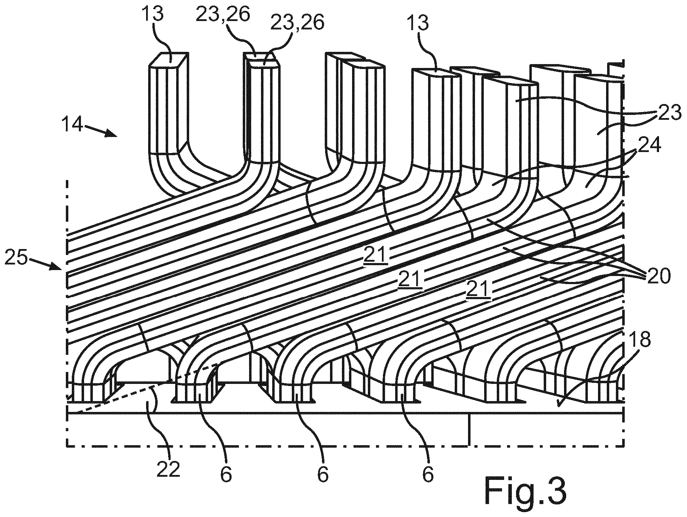

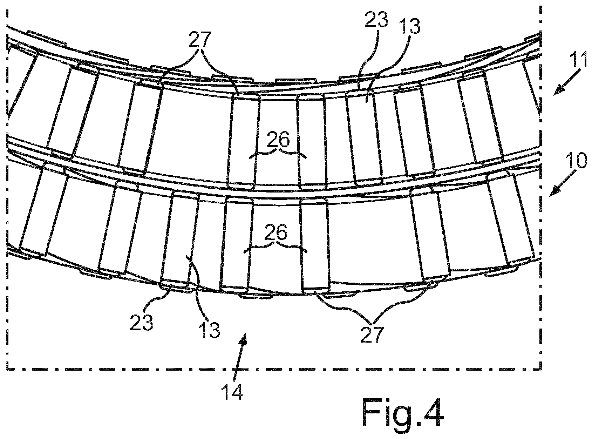

Der Verschaltungsbereich 14 ist in Fig. 3 und Fig. 4 noch einmal vergrößert dargestellt.

In Fig. 3 ist dargestellt, wie zum Bilden der Spule 15 und der übrigen Spulen von den elektrischen Leiterelementen 6, 7 jeweils die an einer Stirnseite 18 an einem axialen Ende 19 des Blechpakets 2 herausstehenden Pin-Enden oder Leiterstücke 20 geschrägt oder geknickt worden sind, sodass ein Schrägungsbereich 21 einen Schrägungswinkel 22 bezüglich der Stirnfläche 18 aufweist.

Die Leiterstücke 20 weisen des Weiteren Leiterenden 23 auf, die parallel zur Achse 9 ausgerichtet sind. Die Leiterstücke 20 weisen hierzu eine Kröpfung 24 auf.

Die Schrägungswinkel 22 aller Schrägungsbereiche 21 der Leiterstücke 20 sind gleich. Hierdurch liegen die Leiterstücke 20 besonders dicht aufeinander. Die Leiterstücke 20 sind Bestandteil eines Wickelkopfes 25 an der Stirnseite 18 des Blechpakets 2.

Im Verschaltungsbereich 14 sind paarweise jeweils ein Leiterende 23 der äußeren Schicht 10 und ein Leiterende 23 der inneren Schicht 11 axial fluchtend angeordnet und elektrisch miteinander verschaltet. Die elektrische Verschaltung kann beispielsweise durch Verschweißen oder Verlöten der Leiterenden 23 erfolgt sein. Über die Leiterenden 23 im Verschaltungsbereich 14 sind die Windungen 16 miteinander verschaltet. Die Leiterenden 23 im Verschaltungsbereich 14 werden deshalb im Folgenden als Verschaltungsenden 26 bezeichnet. Die Spulenanschlüsse 13 sind jeweils durch ein Leiterende 23 gebildet, das zwischen zwei benachbarten Leiterenden 27 der jeweils anderen Schicht 10, 11 angeordnet ist.

Außerhalb der Verschaltungsbereiche 14 im Normalbereich 14' sind die Leiterenden 23 in gleichmäßigen Winkelabständen zueinander angeordnet. In den Verschaltungsbereichen 14 ist es dagegen notwendig, wie in Fig. 4 gezeigt, die Winkelabstände der Leiterenden 23 zu variieren, um zum einen die Spulenanschlüsse 13 und zum anderen die Verschaltungsenden 26 zu bilden.

Um den Wickelkopf 25 bei dem Stator 1 auszugestalten, sind die Leiterelemente 6, 7 derart verformt worden, dass sich die Schrägungsbereiche 21 und die Kröpfung 24 ergeben und die Leiterenden 23 in den beschriebenen Relativpositionen zueinander angeordnet sind, sodass die Leiterenden 23 im Normalbereich 14' regelmäßige oder gleichmäßige Winkelabstände zueinander aufweisen und im Verschaltungsbereich 14 die Leiterenden 23 zu den Spulenanschlüssen 13 und den Verschaltungsenden 26 geformt sind.

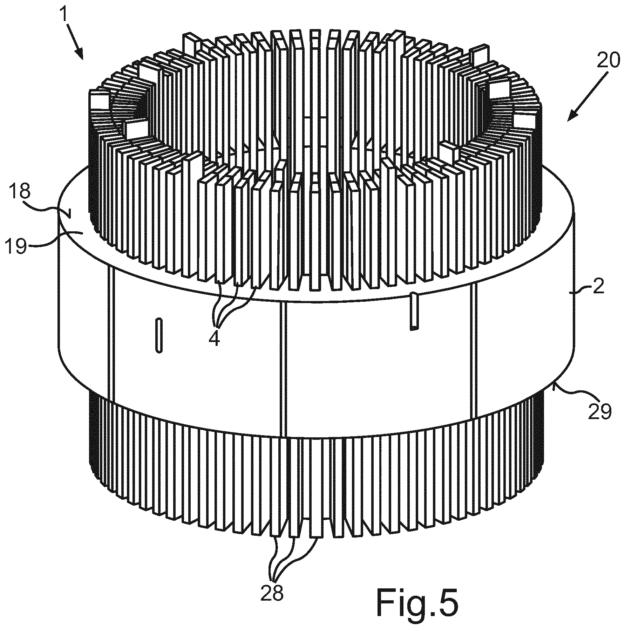

In Fig. 5 ist gezeigt, wie zu Beginn der Herstellung des Stators 1 die Leiterelemente 6, 7 jeweils als gerade Stäbe 28 in die Nuten 4 eingesteckt worden sind. Die Stäbe 28 können hierbei die gleiche axiale Länge aufweisen. Wie in Fig. 5 gezeigt, kann aber auch vorgesehen sein, dass die Leiterstäbe, die Spulenanschlüsse 13 bereitstellen sollen, länger sind als die übrigen Leiterelemente. Des Weiteren ist zu beachten, dass die beschriebenen Verschaltungsbereiche 14 lediglich an einer Stirnseite 18 bereitzustellen sind. An einer gegenüberliegenden Stirnseite 29 können alle Leiterelemente gleichmäßig geformt werden, d.h. es ist dort nur ein Normalbereich vorzusehen. Im Falle der Haarnadeltechnik sind dort die Leiterelemente bereits durch die U-Form der Drähte elektrisch verbunden.

Die Stäbe 28 können entlang der axialen Richtung 3 in die Nuten 4 eingesteckt worden sein. Hierdurch ergibt sich eine Steckwicklung der elektrischen Spulen des Stators 1.

Ausgehend von dem Stator 1 im Zustand, wie er in Fig. 5 dargestellt ist, wird durch eine Umformung der aus der Stirnseite 18 herausragenden Leiterstücke 20 der Wickelkopf 25 gebildet.

Hierzu findet zunächst ein Positionierprozess statt, in welchem alle Leiterenden 6 der Schicht 10 in eine relative Endstellung zueinander gebracht werden, die sie auch bei dem fertigen Stator 1 gemäß Fig. 1 aufweisen. Genauso werden die Leiterenden 23 der Leiterelemente 7 der inneren Schicht 11 ihrerseits in eine relative Endstellung gebracht, die sie auch bei dem fertigen Stator 1 gemäß Fig. 1 aufweisen.

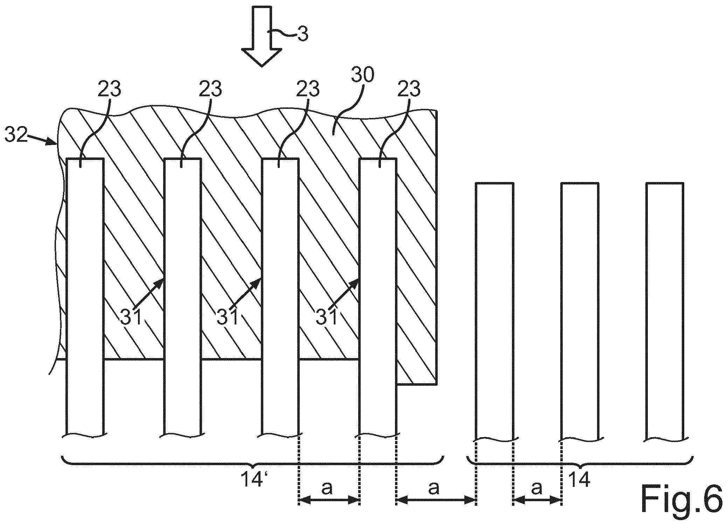

Fig. 6 zeigt, wie hierzu in einem ersten Schritt des Positionierprozesses ein Normalschrägungswerkzeug 30 einerseits und Leiterenden 23 der Leiterenden des Normalbereichs 14' zusammengesteckt werden, indem die Leiterenden 23 und das Normalschrägungswerkzeug 30 zusammengesteckt werden und hierdurch die Leiterenden 23 in Aufnahmebereiche oder Taschen 31 des Normalschrägungswerkzeugs 30 hinein gesteckt oder in den Taschen 31 angeordnet werden. Die Taschen 31 können jeweils beispielsweise als ein Sackloch eines Körpers 32 des Normalschrägungswerkzeugs 30 ausgestaltet sein. In Fig. 6 ist gezeigt, dass alle Leiterenden entlang der Umfangsrichtung den gleichen Abstand a aufweisen, der durch die Anordnung der Nuten 4 im Blechpaket 2 vorgegeben ist.

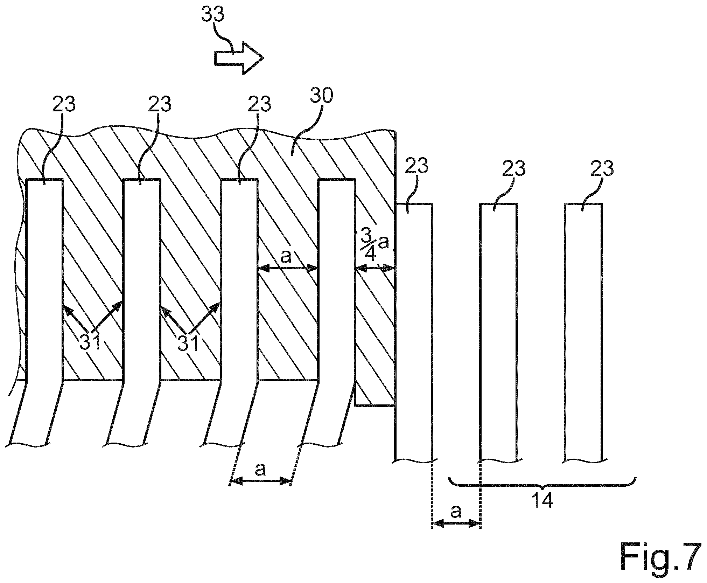

Fig. 7 zeigt, wie anschließend das Normalschrägungswerkzeug 30 mit den in den Taschen 31 angeordneten Leiterenden 23 durch eine relative Drehung des Stators 2 und des Normalschrägungswerkzeugs 30 entlang der Umfangsrichtung U1 im Falle der äußeren Schicht 10 in einer Drehung 33 um einen vorbestimmten Drehwinkel in Umfangsrichtung gedreht werden. Im Falle der Schicht 11 erfolgt die Drehung 33 in die entgegengesetzte Umfangsrichtung U2. In Fig. 7 sind Abmessungen des Normalschrägungswerkzeugs 30 und eines Selektivschrägungswerkzeugs 34 im Verhältnis zum Abstand a der Leiterenden an den Nuten 4 veranschaulicht.

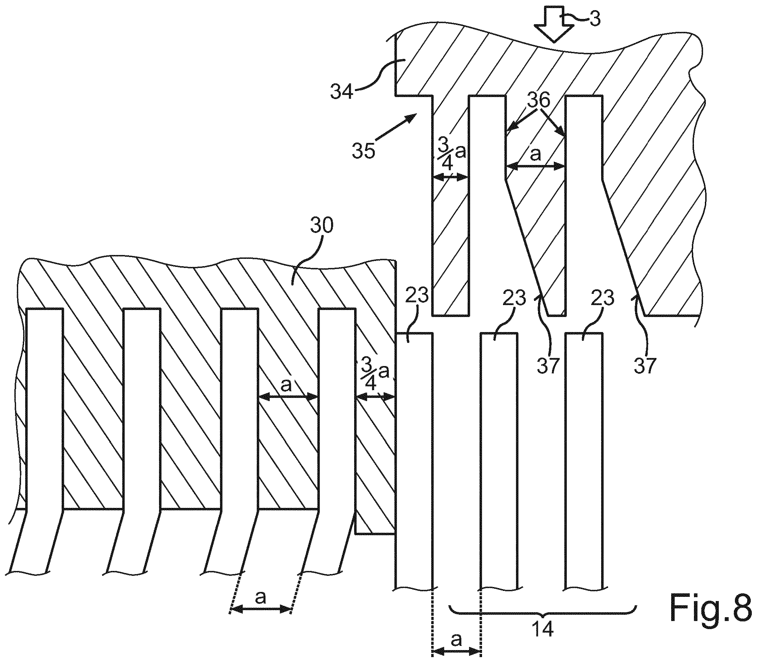

Fig. 8 zeigt, wie anschließend das Selektivschrägungswerkzeug 34 und die Leiterenden 23 des Verschaltungsbereichs 14 zusammengesteckt werden. Das Selektivschrägungswerkzeug 34 weist ebenfalls Taschen 35, 36 auf, in welche jeweils eines der Leiterenden 23 angeordnet wird, indem das Selektivschrägungswerkzeug 34 und die Leiterenden 23 in axialer Richtung 3 zusammengesteckt werden. Hierbei weisen einige Taschen 36 eine bezüglich der axialen Richtung 3 schräge Taschenwand 37 auf.

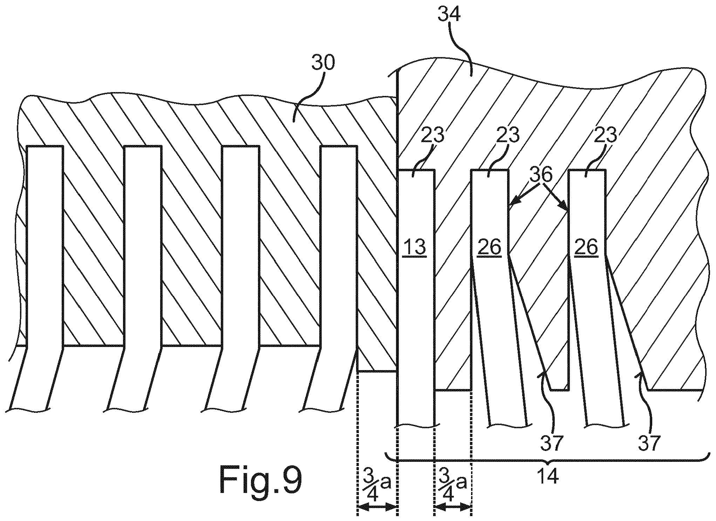

Fig. 9 zeigt, wie nach dem Zusammenstecken des Selektivschrägungswerkzeugs 34 und der Leiterenden 23 aufgrund der schrägen Taschenwandung 37 die in den Taschen 36 angeordneten Leiterenden 23 derart in Umfangsrichtung bewegt worden sind, dass die Leiterenden 23 im Verschaltungsbereich 14 relativ zueinander bewegt worden sind. Hierdurch ergeben sich ein Leiterende 23 für den Spulenanschluss 13 und Verschaltungsenden 26.

Nach dem Zusammenstecken der Leiterenden 23 und des Normalschrägungswerkzeugs 30 sowie des Selektivschrägungswerkzeugs 34 ist der Positionierprozess beendet, und die Leiterenden 23 aller Leiterelemente 6, 7 weisen ihre relative Endstellung auf.

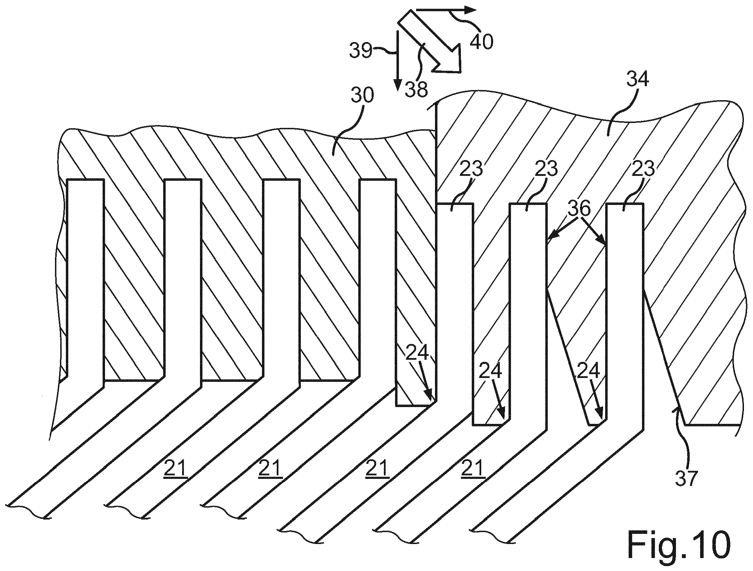

In Fig. 10 ist gezeigt, wie in einem anschließenden Twistprozess sowohl das Normalschrägungswerkzeug 30 als auch das Selektivschrägungswerkzeug 34 eine gemeinsame Twistbewegung 38 bezüglich des Blechpakets 2 ausführen. Hierdurch werden die Kröpfungen 24 und die Schrägungsbereiche 21 gebildet. Die Twistbewegung 38 setzt sich zusammen aus einer axialen Bewegung 39 und einer Drehung 40 entlang der Umfangsrichtung. Für die äußere Schicht 10 ist dies die Umfangsrichtung U1, für die innere Schicht 11 die Umfangsrichtung U2. Durch die axiale Bewegung 39 werden die Werkzeuge 30, 34 einerseits und das Blechpaket 2 andererseits zusammengeführt.

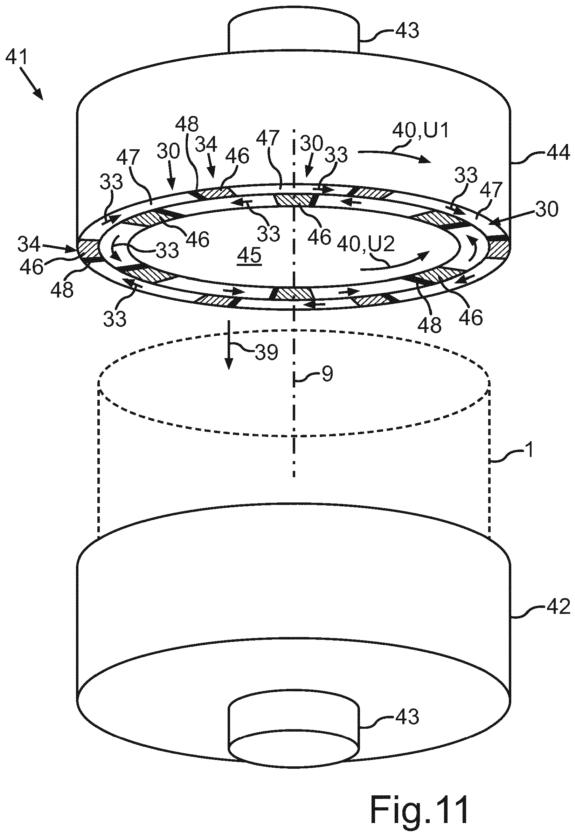

Fig. 11 zeigt eine Werkzeuganordnung 41, mittels welcher der Positionierprozess (Fig. 6 bis Fig. 9) und der Twistprozess (Fig. 10) durchgeführt werden können. Die Werkzeuganordnung 41 kann eine Halteeinrichtung 42 für den Stator 1, eine Bewegungseinrichtung 43 zum Durchführen der beschriebenen Bewegungen und einen Werkzeugbereich 44 für den äußeren Ring und einen Werkzeugbereich 45 für den inneren Ring aufweisen.

Die Halteeinrichtung 42 kann mechanische Halteelemente aufweisen. Die Bewegungseinrichtung 43 kann zumindest einen Elektromotor und/oder eine Hydraulik aufweisen.

Jeder Werkzeugbereich 44, 45 kann für jede der Spulen jeweils einen Werkzeugteil 46 aufweisen, durch welchen insgesamt für die Werkzeugbereiche 44, 45 das Selektivschrägungswerkzeug 34 gebildet ist. Weitere Werkzeugteile 47 bilden zusammen das Normalschrägungswerkzeug 30. Die Taschen der Werkzeuge 30, 34 sind in Fig. 11 der Übersichtlichkeit halber nicht dargestellt. Die Werkzeugteile 46, 47 sind jeweils durch eine Lücke oder einen Spalt 48 voneinander beabstandet und unabhängig voneinander durch die Bewegungseinrichtung 43 bewegbar, um hierdurch zunächst, wie in Fig. 6 und Fig. 7 beschrieben, mit dem Normalschrägungswerkzeug 30 die Drehung 33 auszuführen.

In die Halteeinrichtung 42 kann der Stator 1 in dem in Fig. 5 gezeigten Zustand mit den Stäben 28 angeordnet werden. Durch die Bewegungseinrichtung 43 werden dann die Werkzeugbereiche 44 und 45 auf die Leiterenden 23 durch den Positionierprozess angeordnet und anschließend mittels des Twistprozesses der Wickelkopf 25 in einem Arbeitsgang geformt. Danach können die dann axial fluchtend angeordneten Leiterenden 23 elektrisch miteinander verbunden werden, indem sie beispielsweise verschweißt oder verlötet werden. Hierzu ist es möglich, ein Laserschweißverfahren zu verwenden.

Danach sind die Spule 15 und die übrigen Spulen im Stator 1 bereitgestellt.

Für die gegenüberliegende Stirnseite 29 kann ein einfacheres Werkzeug vorgesehen sein, welches lediglich den Twistprozess ausführt, bei welchem alle Leiterenden 23 an der Stirnseite 29 um denselben Drehwinkel in die Umfangsrichtungen U1, U2 gedreht werden und hierdurch die Leiterstücke an der Stirnseite 29 miteinander gleichmäßig verschränkt werden.

Durch die Werkzeuganordnung 41 und die Prozessreihenfolge des Positionierprozesses und des Twistprozesses werden bei dem Stator 1 die aus der Stirnseite 18 herausragenden Leiterstücke 20 verschränkt. Besondere Merkmale hierbei sind das selektive Twisten zum Ausbilden der Verschaltungsbereiche 14 bei gleichzeitiger kompakter oder geringer Wickelkopfhöhe, da alle Schrägungsbereiche 21 der Leiterstücke 20 denselben Biegewinkel oder Schrägungswinkel 22 bezüglich der Stirnseite 18 aufweisen. Durch das selektive Twisten, das heißt ein unterschiedliches Behandeln der Leiterenden 23 im Normalbereich 14' und im Verschaltungsbereich 14, weisen die Leiterenden 23 bereits ihre relative Endstellung auf, bevor der Twistprozess begonnen wird. Innerhalb der Verschaltungsbereiche 14 wird durch Einführschrägen, die durch die schrägen Taschenwandungen 37 gebildet sind, auch innerhalb jedes Verschaltungsbereichs 14 bereits die relative Endstellung der Leiterenden 23 bewirkt.

Beim Positionierprozess und anschließenden Twistprozess werden die Leiterenden 23 im Verschaltungsbereich um einen Betrag weniger verschränkt als die Leiterenden 23 im Normalbereich 14'. Dies wird als negativer selektiver Twist bezeichnet. Falls die Leiterenden 23 im Verschaltungsbereich um den Betrag mehr verschränkt sind, ergibt sich dagegen ein positiver Twist. Der Verschränkungsprozess dient allgemein zur Bildung von Spulen im Statorblechpaket 2. Durch den selektiven Twist entsteht die Möglichkeit, den Wickelkopf unterschiedlich zu verschalten, indem die relative Endstellung der Leiterenden 23 im Verschaltungsbereich 14 jeweils festgelegt wird.

Allgemein ergibt sich folgende Prozessbeschreibung. Die Leiterenden 23 der Leiterelemente 6, 7 jeder Lage oder Schicht 10, 11 werden axial in den Werkzeugbereichen 44, 45 in die dort angeordneten Taschen aufgenommen. Die Fixierung der Leiterenden 23 in den Taschen erfolgt während des Twistprozesses durch passive Klemmung. Diese wird gewährleistet durch entsprechend geringes Spiel zwischen den Leiterenden 23 und den Taschen. Die Werkzeugbereiche 44, 45 werden dann für den Twistprozess für Innen- und Außenschicht 10, 11 gegenläufig rotiert und verschränken dabei alle Leiterenden 23 gleichmäßig um einen identischen Drehwinkel entlang der Umfangsrichtung.

Durch die beschriebene Ausgestaltung der Taschen weisen die Leiterenden 23 bereits relativ zueinander fertig ausgerichtete Positionen vor dem eigentlichen Twistprozess auf. Um zu erreichen, dass die Leiterenden 23 bereits relativ zueinander fertig ausgerichtet sind, bevor durch die Werkzeuganordnung 41 der Twistprozess durchgeführt wird, müssen die Leiterenden 23 in zwei unterschiedlichen Prozessschritten in den Taschen der Werkzeugbereiche 44 beziehungsweise 45 aufgenommen werden. Der Ablauf des Umformvorganges ist dann wie folgt, wobei Bewegungen, die aufgrund von Verspannung und Rückfederung notwendig sind, hier nicht beschrieben worden sind.

Es erfolgt die Aufnahme der Leiterenden 23 für den Normalbereich 14' durch axiales Verfahren des Normalschrägungswerkzeugs 30. Dann erfolgt eine Positionierung der Leiterenden 23 des Normalbereichs 14` in Twist-Drehrichtung durch radiales Verfahren des Normalschrägungswerkzeugs 30 um den halben Drehwinkel des selektiven Twist. Anschließend erfolgt die Positionierung der Leiterenden 23 für den Verschaltungsbereich 14 um den halben Drehwinkel des selektiven Twists durch axiales Verfahren des Selektivschrägungswerkzeugs 34 mit den Einführschrägen der geschrägten Taschenwände 37. Abschließend erfolgt dann der eigentliche Twistprozess zum Ausbilden des Wickelkopfes 25.

Insgesamt zeigt das Beispiel, wie durch die Erfindung eine Werkzeugvariante für das selektive Twisten beim Verschränken von Pin-Enden in der Herstellung von Motorwicklungen bereitgestellt werden kann.

## Patentansprüche

1. Verfahren zum Herstellen eines Stators (1), wobei für eine radial außenliegende Schicht (10) und eine radial innenliegende Schicht (11) einer Zweischichtwicklung (12) in Nuten (4) eines Blechpakets (2) jeweils ein elektrisches Leiterelement (6, 7) pro Schicht (10, 11) angeordnet wird, wobei die Leiterelemente (6, 7) als gerade Stäbe (28) oder als U-förmige Drähte bereitgestellt werden, die zum jeweiligen Anordnen in einer der Nuten (4) in ein axiales Ende der Nut (4) gesteckt und in axialer Richtung (3) in die Nut (4) hineingeschoben werden, und wobei
für das Gestalten von Spulenanschlüssen (13) von Spulen und einer Windungsverschaltung (17) der Spulen jeweils die Leiterelemente (6, 7) in einem Verschaltungsbereich (14) selektiv geformt werden und die Verschaltungen der Leiterelemente (6, 7) außerhalb des Verschaltungsbereichs (14) zusammen einen Normalbereich (14') darstellen, in welchem keine selektive Formung nötig ist, und an einer Stirnseite (18) des Blechpakets (2) bei einer oder beiden der Schichten (10, 11) dann jeweils
in einem Positionierprozess
in dem Normalbereich (14') durch axiales Zusammenstecken eines Normalschrägungswerkzeugs (30) mit axialen Leiterenden (23) der Leiterelemente (6, 7) des Normalbereichs (14') und anschließendes relatives Drehen (33) des Normalschrägungswerkzeugs (30) bezüglich des Blechpakets (2) und
in dem Verschaltungsbereich (14) durch axiales Zusammenstecken eines Selektivschrägungswerkzeugs (34) mit axialen Leiterenden (23) der Leiterelemente (6, 7) des Verschaltungsbereichs (14) die Leiterenden (23) aller Leiterelemente (6, 7) der Schicht (10, 11) derart relativ zueinander bewegt werden, dass sie eine für die Verschaltung eines Teils der Leiterenden (23) mit korrespondierenden Leiterenden (23) der anderen Schicht (11, 10) vorgesehene relative Endstellung zueinander aufweisen,
**dadurch gekennzeichnet, dass**
außerhalb der Verschaltungsbereiche (14) der Spulen in dem Normalbereich (14') die Leiterenden (23) in gleichmäßigen Winkelabständen zueinander anzuordnen sind und in jedem Verschaltungsbereich (14) die Winkelabstände der Leiterenden (23) zu variieren sind, um zum einen die Spulenanschlüsse (13) und zum anderen Verschaltungsenden (26), durch welche Windungen (16) der Spulen miteinander verschaltet sind, zu bilden, und hierzu das Normalschrägungswerkzeug (30) Taschen (31) zum Einstecken eines Leiterendes (23) eines Leiterelements (6, 7) aufweist, und das Selektivschrägungswerkzeug (34) mehrere Taschen (35, 36) zum jeweiligen Aufnehmen des jeweiligen Leiterendes (23) eines der Leiterelemente (6, 7) des Verschaltungsbereichs (14) aufweist, wobei beim Zusammenstecken des Selektivschrägungswerkzeugs (34) mit den Leiterenden (23) der Leiterelemente (6,7) des Verschaltungsbereichs (14) eine bezüglich einer Steckrichtung (3) schräg angeordnete Taschenwand (37) einer oder einiger der Taschen (36) das beim Zusammenstecken in die jeweilige Tasche (36) hineinbewegte Leiterende (23) entlang einer Umfangsrichtung (U1, U2) bewegt, so dass die Leiterenden (23) der Leiterelemente (6, 7) des Verschaltungsbereichs (14) relativ zueinander bewegt werden.

2. Verfahren nach Anspruch 1, wobei in dem Positionierprozess die Leiterenden (23) des Normalbreichs (14') in Umfangsrichtung (U1, U2) um einen vorbestimmten ersten Drehwinkel bewegt werden und die Leiterenden (23) des Verschaltungsbereichs (14) in Umfangsrichtung (U1, U2) um einen jeweiligen Drehwinkel bewegt werden, der jeweils kleiner als der erste Drehwinkel ist.

3. Verfahren einem der vorhergehenden Ansprüche, wobei nach dem Anordnen der Leiterelemente (6, 7) in den Nuten (4) jedes Leiterelement (6, 7) der Schicht (10, 11) aus der Stirnseite (18) als gerades Leiterstück (20) axial herausragt und nach dem Positionierprozess dann in einem Twistprozess durch relatives Drehen (40) und axiales Zusammenführen (39) der Werkzeuge (30, 34) einerseits und des Blechpakets (2) andererseits alle geraden Leiterstücke (20) gemeinsam geknickt werden, so dass ein hierdurch gebildeter jeweiliger Schrägungsbereich (21) aller Leiterstücke (20) den gleichen Schrägungswinkel (22) bezüglich der Stirnseite (18) aufweist.

4. Verfahren nach Anspruch 3, wobei in dem Twistprozess die Leiterstücke (20) der außenliegenden Schicht (10) in eine Umfangsrichtung (U1) und die Leiterstücke (20) der innenliegenden Schicht (11) in eine entgegen gesetzte Umfangsrichtung (U2) geknickt werden, so dass die Leiterstücke (20) der beiden Schichten (10, 11) zueinander verschränkt angeordnet sind.

5. Verfahren nach Anspruch 3 oder 4, wobei durch den Twistprozess die durch das Normalschrägungswerkzeug (30) bewegten Leiterenden (23) einer der Schichten (10) jeweils radial fluchtend zu korrespondierenden Leiterenden (23) der anderen Schicht (11) angeordnet werden.

6. Verfahren nach einem der Ansprüche 3 bis 5, wobei nach dem Twistprozess nur ein Teil der durch das Selektivschrägungswerkzeug (23) bewegten Leiterenden (26) einer der Schichten (10) zu korrespondierenden Leiterenden (26) der anderen Schicht (11) radial fluchtend angeordnet ist und pro vorgesehener elektrischer Spule (15) des Stators (1) jeweils pro Schicht ein Leiterende (13) der Leiterelemente (6, 7) des Verschaltungsbereichs (14) zwischen zwei benachbarten Leiterenden (27) der anderen Schicht (11) angeordnet ist.

7. Verfahren nach einem der Ansprüche 3 bis 6, wobei im Positionierprozess die Leiterenden (23) jeweils in einer Tasche (31, 35, 36) des jeweiligen Werkzeugs (30, 34) angeordnet werden und durch den Twistprozess jedes Leiterelement (6, 7) zwischen dem Schrägungsbereich (21) und dem Leiterende (23) gekröpft wird, so dass das Leiterende (23) axial ausgerichtet bleibt.

8. Werkzeuganordnung (41) zum Herstellen eines Stators (1) für eine elektrische Maschine, bei dem für das Gestalten von Spulenanschlüssen (13) von Spulen und einer Windungsverschaltung (17) der Spulen jeweils Leiterelemente (6, 7) in einem Verschaltungsbereich (14) selektiv zu formen sind und Verschaltungen der Leiterelemente (6, 7) außerhalb des Verschaltungsbereichs (14) zusammen einen Normalbereich (14') darstellen, in welchem keine selektive Formung nötig ist, wobei die Leiterelemente (6, 7) gerade Stäbe (28) oder U-förmige Drähte sind, die in ein axiales Ende einer jeweiligen Nut (4) eines Blechpakets (2) gesteckt und in axialer Richtung (3) in die Nut (4) hineingeschoben sind,
wobei die Werkzeuganordnung (41) aufweist:
- ein Normalschrägungswerkzeug (30) mit jeweiligen Taschen (31) zum Einstecken eines Leiterendes (23) eines der Leiterelemente (6, 7),
- ein Selektivschrägungswerkzeug (34) mit jeweiligen Taschen (35, 36) zum Einstecken eines Leiterendes (23) eines der Leiterelemente (6, 7),
- eine Halteeinrichtung (42) zum Halten des Blechpakets (2) derart, dass eine Stirnseite (18) des Blechpakets (2) dem Normalschrägungswerkzeug (30) und dem Selektivschrägungswerkzeug (34) zugewandt ist,
- eine Bewegungseinrichtung (43), die dazu ausgelegt ist, bei in der Halteeinrichtung (42) angeordnetem und mit Leiterelementen (6, 7) bestücktem Blechpaket (2)
in einem Positionierprozess jeweils ein Leiterende (23) eines der Leiterelemente (6, 7) in jeweils eine der Taschen (31, 35, 36) anzuordnen und hierzu zuerst das Normalschrägungswerkzeug (30) entlang einer axialen Richtung (3) an die Stirnseite (18) heranzubewegen und dann in Umfangsrichtung (U1, U2) bezüglich der Stirnseite (18) zu drehen und dann das Selektivschrägungswerkzeug (34) entlang der axialen Richtung (3) an die Stirnseite (18) heranzubewegen **dadurch gekennzeichnet, dass** außerhalb der Verschaltungsbereiche (14) in dem Normalbereich (14') die Leiterenden (23) in gleichmäßigen Winkelabständen zueinander anzuordnen sind und in jedem Verschaltungsbereich (14) die Winkelabstände der Leiterenden (23) zu variieren sind, um zum einen die Spulenanschlüsse (13) und zum anderen Verschaltungsenden (26), durch welche Windungen (16) der Spulen miteinander verschaltet sind, zu bilden, und hierzu bei dem Selektivschrägungswerkzeug (34) einige der Taschen (36) eine bezüglich der axialen Richtung (3) schräg angeordnete Taschenwand (37) aufweisen, durch welche beim Zusammenstecken jeweils eine Gleitfläche für das jeweilige in die Tasche (36) hineinbewegte Leiterende (34) gebildet ist, die das Leiterende (23) entlang der Umfangsrichtung (U1, U2) abdrängt.

9. Werkzeuganordnung (41) nach Anspruch 8, wobei die Bewegungseinrichtung (43) dazu ausgelegt ist, nach dem Positionierprozess in einem Twistprozess das Normalschrägungswerkzeug (30) und das Selektivschrägungswerkzeug (34) einerseits und das Blechpaket (2) andererseits zusammenzuführen und währenddessen das Normalschrägungswerkzeug (30) und das Selektivschrägungswerkzeug (34) gemeinsam relativ zum Blechpaket (2) zu drehen, so dass die Leiterelemente (6, 7) gleichmäßig bezüglich der Stirnseite (18) um denselben Schrägungswinkel (22) geknickt werden.

## Claims

1. Method for producing a stator (1), in each case one electric conductor element (6, 7) per layer (10, 11) being arranged in grooves (4) of a laminated core (2) for a radially outer layer (10) and a radially inner layer (11) of a double-layer winding (12), the conductor elements (6, 7) being provided as straight rods (28) or as U-shaped wires which, for the respective arrangement in one of the grooves (4), are plugged into an axial end of the groove (4) and are pushed in the axial direction (3) into the groove (4), and, for the configuration of coil connectors (13) of coils and a winding interconnection (17) of the coils, the conductor elements (6, 7) being in each case shaped selectively in an interconnection region (14), and the interconnections of the conductor elements (6, 7) outside the interconnection region (14) together constituting a normal region (14'), in which selective shaping is not necessary, and the conductor ends (23) of all the conductor elements (6, 7) of the layer (10, 11) then being moved relative to one another on an end side (18) of the laminated core (2) in the case of one of or the two layers (10, 11) in each case in a positioning process in the normal region (14') by way of axial plugging together of a normal bevel tool (30) with axial conductor ends (23) of the conductor elements (6, 7) of the normal region (14') and subsequent relative rotation (33) of the normal bevel tool (30) with regard to the laminated core (2), and in the interconnection region (14) by way of axial plugging together of a selective bevel tool (34) with axial conductor ends (23) of the conductor elements (6, 7) of the interconnection region (14), in such a way that the said conductor ends (23) have a relative end position with respect to one another, which relative end position is provided for the interconnection of part of the conductor ends (23) with corresponding conductor ends (23) of the other layer (11, 10), **characterized in that** the conductor ends (23) are to be arranged at uniform angular spacings from one another outside the interconnection regions (14) of the coils in the normal region (14'), and the angular spacings of the conductor ends (23) are to be varied in every interconnection region (14), in order to form firstly the coil connectors (13) and secondly interconnection ends (26), by way of which windings (16) of the coils are interconnected with one another, and, to this end, the normal bevel tool (30) has pockets (31) for plugging in a conductor end (23) of a conductor element (6, 7), and the selective bevel tool (34) has a plurality of pockets (35, 36) for respectively receiving the respective conductor end (23) of one of the conductor elements (6, 7) of the interconnection region (14), a pocket wall (37), arranged obliquely with regard to a plugging direction (3), of one or some of the pockets (36) moving the conductor end (23), moved into the respective pocket (36) during the plugging-together operation, along a circumferential direction (U1, U2) during the plugging-together operation of the selective bevel tool (34) with the conductor ends (23) of the conductor elements (6, 7) of the interconnection region (14), with the result that the conductor ends (23) of the conductor elements (6, 7) of the interconnection region (14) are moved relative to one another.

2. Method according to Claim 1, the conductor ends (23) of the normal region (14') being moved in the circumferential direction (U1, U2) by a predetermined first rotary angle in the positioning process, and the conductor ends (23) of the interconnection region (14) being moved in the circumferential direction (U1, U2) by a respective rotary angle which is smaller in each case than the first rotary angle.

3. Method according to either of the preceding claims, each conductor element (6, 7) of the layer (10, 11) protruding axially out of the end side (18) as a straight conductor piece (20) after the arranging of the conductor elements (6, 7) in the grooves (4), and then, after the positioning process, all the straight conductor pieces (20) being jointly bent in a twisting process by way of relative rotating (40) and axial bringing together (39) of the tools (30, 34) firstly and of the laminated core (2) secondly, with the result that a respective bevel region (21), formed as a result, of all the conductor pieces (20) has the same bevel angle (22) with regard to the end side (18).

4. Method according to Claim 3, the conductor pieces (20) of the outer layer (10) being bent in one circumferential direction (U1), and the conductor pieces (20) of the inner layer (11) being bent in an opposite circumferential direction (U2) in the twisting process, with the result that the conductor pieces (20) of the two layers (10, 11) are arranged in a crossed manner with respect to one another.

5. Method according to Claim 3 or 4, the conductor ends (23), moved by way of the normal bevel tool (30), of one of the layers (10) being arranged as a result of the twisting process in each case in a radially aligned manner with respect to corresponding conductor ends (23) of the other layer (11).

6. Method according to one of Claims 3 to 5, only part of the conductor ends (26), moved by way of the selective bevel tool (23), of one of the layers (10) being arranged in a radially aligned manner with respect to corresponding conductor ends (26) of the other layer (11) after the twisting process, and one conductor end (13) of the conductor elements (6, 7) of the interconnection region (14) being arranged between two adjacent conductor ends (27) of the other layer (11) per provided electric coil (15) of the stator (1), in each case per layer.

7. Method according to one of Claims 3 to 6, the conductor ends (23) being arranged in the positioning process in each case in a pocket (31, 35, 36) of the respective tool (30, 34), and each conductor element (6, 7) being bent at right angles between the bevel region (21) and the conductor end (23) by way of the twisting process, with the result that the conductor end (23) remains oriented axially.

8. Tool arrangement (41) for producing a stator (1) for an electric machine, in the case of which, for the configuration of coil connectors (13) of coils and a winding interconnection (17) of the coils, conductor elements (6, 7) are in each case shaped selectively in an interconnection region (14), and interconnections of the conductor elements (6, 7) outside the interconnection region (14) together constitute a normal region (14'), in which selective shaping is not necessary, the conductor elements (6, 7) being straight rods (28) or U-shaped wires which are plugged into an axial end of a respective groove (4) of a laminated core (2) and are pushed in the axial direction (3) into the groove (4), the tool arrangement (41) having:
- a normal bevel tool (30) with respective pockets (31) for plugging in a conductor end (23) of one of the conductor elements (6, 7),
- a selective bevel tool (34) with respective pockets (35, 36) for plugging in a conductor end (23) of one of the conductor elements (6, 7),
- a holding device (42) for holding the laminated core (2) in such a way that an end side (18) of the laminated core (2) faces the normal bevel tool (30) and the selective bevel tool (34),
- a movement device (43) which is designed, in the case of a laminated core (2) which is arranged in the holding device (42) and is fitted with conductor elements (6, 7), to arrange, in a positioning process, in each case one conductor end (23) of one of the conductor elements (6, 7) in in each case one of the pockets (31, 35, 36) and, to this end, to first of all move the normal bevel tool (30) along an axial direction (3) up to the end side (18), and then to rotate it in the circumferential direction (U1, U2) with regard to the end side (18), and then to move the selective bevel tool (34) along the axial direction (3) up to the end side (18), **characterized in that** the conductor ends (23) are to be arranged at uniform angular spacings from one another outside the interconnection regions (14) in the normal region (14'), and the angular spacings of the conductor ends (23) are to be varied in every interconnection region (14), in order to form firstly the coil connectors (13) and secondly interconnection ends (26), by way of which windings (16) of the coils are interconnected with one another, and, to this end, in the case of the selective bevel tool (34), some of the pockets (36) have a pocket wall (37) which is arranged obliquely with regard to the axial direction (3) and by way of which, during the plugging-together operation, in each case one sliding face is formed for the respective conductor end (34) which is moved into the pocket (36), which sliding face pushes the conductor end (23) away along the circumferential direction (U1, U2).

9. Tool arrangement (41) according to Claim 8, the movement device (43) being designed, after the positioning process, to bring together the normal bevel tool (30) and the selective bevel tool (34) firstly and the laminated core (2) secondly in a twisting process and, during this, to rotate the normal bevel tool (30) and the selective bevel tool (34) together relative to the laminated core (2), with the result that the conductor elements (6, 7) are bent by the same bevel angle (22) uniformly with regard to the end side (18).

## Revendications

1. Procédé permettant de fabriquer un stator (1), dans lequel, pour une couche radialement externe (10) et une couche radialement interne (11) d'un enroulement à deux couches (12), respectivement un élément conducteur électrique (6, 7) par couche (10, 11) est disposé dans des encoches (4) d'un noyau feuilleté (2), les éléments conducteurs (6, 7) étant fournis sous forme de tiges droites (28) ou de fils métalliques en forme de U qui sont pour l'agencement respectif dans l'une des encoches (4) enfichés dans une extrémité axiale de l'encoche (4) et sont insérés dans l'encoche (4) dans la direction axiale (3), et dans lequel, afin de façonner des bornes (13) de bobines et un câblage d'enroulement (17) des bobines, les éléments conducteurs (6, 7) sont respectivement formés sélectivement dans une zone de câblage (14), et les câblages des éléments conducteurs (6, 7) en dehors de la zone de câblage (14) représentent ensemble une zone normale (14') dans laquelle aucune mise en forme sélective n'est nécessaire, et
sur une face frontale (18) du noyau feuilleté (2) sur une ou les deux des couches (10, 11), ensuite respectivement dans un processus de positionnement,
dans la zone normale (14') par un assemblage axial d'un outil à inclinaison normale (30) avec des extrémités de conducteur axiales (23) des éléments conducteurs (6, 7) de la zone normale (14') et par une rotation relative (33) consécutive de l'outil à inclinaison normale (30) par rapport au noyau feuilleté (2), et
dans la zone de câblage (14) par un assemblage axial d'un outil à inclinaison sélective (34) avec des extrémités de conducteur axiales (23) des éléments conducteurs (6, 7) de la zone de câblage (14),
les extrémités de conducteurs (23) de tous les éléments conducteurs (6, 7) de la couche (10, 11) sont déplacées les unes par rapport aux autres de telle sorte qu'elles présentent les unes par rapport aux autres une position finale relative prévue pour le câblage d'une partie des extrémités de conducteur (23) avec des extrémités de conducteur (23) correspondantes de l'autre couche,
**caractérisé en ce qu'**en dehors des zones de câblage (14) des bobines, dans la zone normale (14'), les extrémités de conducteur (23) sont à disposer à intervalles angulaires réguliers les unes par rapport aux autres, et les intervalles angulaires des extrémités de conducteur (23) sont à varier dans chaque zone de câblage (14) afin de former d'une part les bornes de bobine (13) et d'autre part des extrémités de câblage (26) par lesquelles des enroulements (16) des bobines sont câblés les uns avec les autres, et à cet effet, l'outil à inclinaison normale (30) présente des poches (31) servant à l'enfichage d'une extrémité de conducteur (23) d'un élément conducteur (6, 7), et l'outil à inclinaison sélective (34) présente plusieurs poches (35, 36) servant à recevoir respectivement l'extrémité de conducteur respective (23) d'un des éléments conducteurs (6, 7) de la zone de câblage (14), dans lequel, lorsque l'outil à inclinaison sélective (34) est assemblé avec les extrémités de conducteur (23) des éléments conducteurs (6, 7) de la zone de câblage (14), une paroi de poche (37) d'une ou de certaines des poches (36), disposée en biais par rapport à une direction d'enfichage (3), déplace l'extrémité de conducteur (23), entrée dans la poche respective (36) lors de l'assemblage, le long d'une direction circonférentielle (U1, U2) de sorte que les extrémités de conducteur (23) des éléments conducteurs (6, 7) de la zone de câblage (14) sont déplacées les unes par rapport aux autres.

2. Procédé selon la revendication 1, dans lequel, dans le processus de positionnement, les extrémités de conducteur (23) de la zone normale (14') sont déplacées dans la direction circonférentielle (U1, U2) selon un premier angle de rotation prédéterminé, et les extrémités de conducteur (23) de la zone de câblage (14) sont déplacées dans la direction circonférentielle (U1, U2) selon un angle de rotation respectif qui est respectivement inférieur au premier angle de rotation.

3. Procédé selon l'une quelconque des revendications précédentes, dans lequel, après que les éléments conducteurs (6, 7) ont été disposées dans les encoches (4), chaque élément conducteur (6, 7) de la couche (10, 11) dépasse axialement de la face frontale (18) sous la forme d'un morceau de conducteur droit (20), et après le processus de positionnement, ensuite dans un processus de torsion, par une rotation relative (40) et un rapprochement axial (39) des outils (30, 34) d'une part et du noyau feuilleté (2) d'autre part, tous les morceaux de conducteur droits (20) sont pliés ensemble de sorte qu'une zone inclinée (21) respective ainsi formée de tous les morceaux de conducteur (20) présente le même angle d'inclinaison (22) par rapport à la face frontale (18).

4. Procédé selon la revendication 3, dans lequel, dans le processus de torsion, les morceaux de conducteur (20) de la couche externe (10) sont pliés dans une direction circonférentielle (U1) et les morceaux de conducteur (20) de la couche interne (11) sont pliés dans une direction circonférentielle opposée (U2) de sorte que les morceaux de conducteur (20) des deux couches (10, 11) sont disposés de façon mutuellement entrelacée.

5. Procédé selon la revendication 3 ou 4, dans lequel, le processus de torsion permet de disposer les extrémités de conducteur (23) d'une des couches (10), déplacées par l'outil à inclinaison normale (30), respectivement en affleurement radial par rapport à des extrémités de conducteur (23) correspondantes de l'autre couche (11).

6. Procédé selon l'une quelconque des revendications 3 à 5, dans lequel, après le processus de torsion, seule une partie des extrémités de conducteur (26) d'une des couches (10), déplacées par l'outil à inclinaison sélective (23), est disposée en affleurement radial par rapport à des extrémités de conducteur (26) correspondantes de l'autre couche (11), et pour chaque bobine électrique (15) prévue du stator (1), respectivement pour chaque couche, une extrémité de conducteur (13) des éléments conducteurs (6, 7) de la zone de câblage (14) est disposée entre deux extrémités de conducteur (27) voisines de l'autre couche (11).

7. Procédé selon l'une quelconque des revendications 3 à 6, dans lequel, dans le processus de positionnement, les extrémités de conducteur (23) sont disposées respectivement dans une poche (31, 35, 36) de l'outil respectif (30, 34), et le processus de torsion permet de couder chaque élément conducteur (6, 7) entre la zone d'inclinaison (21) et l'extrémité de conducteur (23) de sorte que l'extrémité de conducteur (23) reste alignée axialement.

8. Ensemble d'outils (41) permettant de fabriquer un stator (1) pour une machine électrique, dans lequel, afin de façonner des bornes (13) de bobines et un câblage d'enroulement (17) des bobines, les éléments conducteurs (6, 7) sont respectivement à former sélectivement dans une zone de câblage (14), et des câblages des éléments conducteurs (6, 7) en dehors de la zone de câblage (14) représentent ensemble une zone normale (14') dans laquelle aucune mise en forme sélective n'est nécessaire, les éléments conducteurs (6, 7) étant des tiges droites (28) ou des fils métalliques en forme de U qui sont enfichés dans une extrémité axiale d'une encoche respective (4) d'un noyau feuilleté (2) et sont insérés dans l'encoche (4) dans la direction axiale (3),
l'ensemble d'outils (41) présentant :
- un outil à inclinaison normale (30) pourvu de poches (31) respectives servant à enficher une extrémité de conducteur (23) d'un des éléments conducteurs (6, 7),
- un outil à inclinaison sélective (34) pourvu de poches (35, 36) respectives servant à enficher une extrémité de conducteur (23) d'un des éléments conducteurs (6, 7),
- un dispositif de retenue (42) pour retenir le noyau feuilleté (2) de telle sorte qu'une face frontale (18) du noyau feuilleté (2) est tournée vers l'outil à inclinaison normale (30) et vers l'outil à inclinaison sélective (34),
- un dispositif de déplacement (43) qui, lorsque le noyau feuilleté (2) est disposé dans le dispositif de retenue (42) et équipé d'éléments conducteurs (6, 7), est conçu pour disposer dans un processus de positionnement respectivement une extrémité de conducteur (23) d'un des éléments conducteurs (6, 7) dans respectivement l'une des poches (31, 35, 36), et à cet effet pour rapprocher d'abord l'outil à inclinaison normale (30) de la face frontale (18) le long d'une direction axiale (3), et pour le tourner ensuite dans la direction circonférentielle (U1, U2) par rapport à la face frontale (18), et pour rapprocher ensuite l'outil à inclinaison sélective (34) de la face frontale (18) le long de la direction axiale (3),
**caractérisé en ce qu'**en dehors des zones de câblage (14), dans la zone normale (14'), les extrémités de conducteur (23) sont à disposer à intervalles angulaires réguliers, et dans chaque zone de câblage (14), les intervalles angulaires des extrémités de conducteur (23) sont à varier afin de former d'une part les bornes de bobine (13) et d'autre part des extrémités de câblage (26) par lesquelles des enroulements (16) des bobines sont câblés ensemble, et à cet effet, sur l'outil à inclinaison sélective (34), certaines de poches (36) présentent une paroi de poche (37) disposée en biais par rapport à la direction axiale (3) qui forme à l'assemblage respectivement une surface de glissement pour l'extrémité de conducteur (34) respective entrée dans la poche (36) qui repousse l'extrémité de conducteur (23) le long de la direction circonférentielle (U1, U2).

9. Ensemble d'outils (41) selon la revendication 8, dans lequel le dispositif de déplacement (43) est conçu, après le processus de positionnement, dans un processus de torsion, pour rapprocher l'outil à inclinaison normale (30) et l'outil à inclinaison sélective (34) d'une part et le noyau feuilleté (2) d'autre part, et pour tourner en même temps l'outil à inclinaison normale (30) et l'outil à inclinaison sélective (34) ensemble par rapport au noyau feuilleté (2) de sorte que les éléments conducteurs (6, 7) sont pliés de façon homogène par rapport à la face frontale (18) selon le même angle d'inclinaison (22).
